Europäisches Patentamt

European Patent Office

Office européen des brevets

(19)

(11) EP 0 732 578 B1

(12) EUROPÄISCHE PATENTSCHRIFT

(45) Veröffentlichungstag und Bekanntmachung des Hinweises auf die Patenterteilung:
**30.11.2005 Patentblatt 2005/48**

(51) Int Cl.⁷: **G01N 21/03**, B01L 3/00, G01N 21/35

(21) Anmeldenummer: **96103919.5**

(22) Anmeldetag: **13.03.1996**

(54) **Quantitative Transmissionsspektroskopie unter Verwendung von Probenträgern mit Netzen**

Quantitative transmission spectroscopy using specimen support with meshes

Spectroscopie par transmission quantitative utilisant un support d'échantillons avec des réseaux

(84) Benannte Vertragsstaaten:
**DE ES FR GB IT**

(30) Priorität: **16.03.1995 DE 19509094**

(43) Veröffentlichungstag der Anmeldung:
**18.09.1996 Patentblatt 1996/38**

(73) Patentinhaber: **Roche Diagnostics GmbH**
**68305 Mannheim (DE)**

(72) Erfinder:
• **Böcker, Dirk, Dr. Dr.**
**D-69115 Heidelberg (DE)**
• **Werner, Gerhard, Dr.**
**D-69469 Weinheim (DE)**
• **Haar, Hans-Peter, Dr.**
**D-69168 Wiesloch (DE)**

(74) Vertreter: **Pfeifer, Hans-Peter et al**
**Patentanwälte**
**Dr. H.-P. Pfeifer Dr. P. Jany**
**Beiertheimer Allee 19**
**76137 Karlsruhe (DE)**

(56) Entgegenhaltungen:
**WO-A-93/00580**     **DE-A- 2 735 365**
**US-A- 4 574 621**     **US-A- 4 682 890**
**US-A- 5 126 952**

**Beschreibung**

Die Erfindung liegt im Bereich der quantitativen Transmissionsspektroskopie, insbesondere der Infrarotspektroskopie. Erfindungsgemäß wird ein mit einem Netz ausgestatteter Probenträger in Kontakt mit einer Probeflüssigkeit gebracht, so daß die Flüssigkeit über die Maschen des Netzes ausspreitet und in den Maschen einen Flüssigkeitsfilm ausbildet. Der Probenträger, auf dem sich die Probeflüssigkeit befindet, wird im wesentlichen senkrecht zu seiner Netzebene mit einem Strahlenbündel bestrahlt. Die transmittierte Strahlung wird detektiert und die Konzentration von Analyten in der Probeflüssigkeit aufgrund der detektierten Strahlung und des durchstrahlten Flüssigkeitsvolumen berechnet.

Aus der DE 2735365 A ist ein Verfahren zur optischen Bestimmung der Konzentration einer Flüssigkeit bekannt, bei dem ein Netz in eine Flüssigkeit eingetaucht wird, so daß sich in den Maschen ein Flüssigkeitsfilm bildet, der anschließend durchstrahlt wird. Dabei wird eine Meßzelle mit einem kreisscheibenförmigen Siebelement verwendet, das mit seiner unteren Hälfte in die Flüssigkeit eintaucht und mit seiner oberen Hälfte zwischen einer Photozelle und einer Lichtquelle angeordnet ist. Das Siebelement wird in Drehung versetzt, so daß Maschen des Siebelementes, zwischen denen sich ein Flüssigkeitsfilm befindet, von der Lichtquelle durchstrahlt werden.

Aus der WO 93/00580 ist ein Probenhalter für die Infrarotspektroskopie bekannt, der eine in einen Rahmen eingespannte Kunststoffolie umfaßt, auf die eine zu untersuchende Probe aufgebracht wird. Damit sich die Probe leichter auf die Folie aufbringen läßt und darauf besser gehalten wird, ist auf der Folie ein Netz befestigt.

Im Stand der Technik werden quantitative Infrarotspektroskopien durchgeführt, indem eine genau bekannte Menge Probenmaterial auf einen für Infrarotstrahlung durchlässigen Träger aufgegeben wird. Aus der Absorption der Infrarotstrahlung durch das Probenmaterial wird aufgrund der bekannten Menge an Probenmaterial die Menge an Analyten berechnet. Ein solches Verfahren ist beispielsweise in Clinical Chemistry Vol. 38, No. 9, 1992, Seiten 1623 - 1631 beschrieben.

Im Stand der Technik wurden auch bereits Probenträger verwendet, die ein Netz besitzen, auf das eine Probeflüssigkeit aufgegeben wird. Das Patent US-5,290,705 beschreibt einen Probenträger für die optische Analyse, der ein Netz mit Löchern unterschiedlichen Durchmessers besitzt. Aufgrund der verschiedenen Lochgrößen sind die Mengen an Flüssigkeit, die in den jeweiligen Löchern einen freitragenden Film ausbilden, unterschiedlich. Durch die Verwendung eines Probenträgers mit verschieden großen Löchern in ein und demselben Probenträger kann sichergestellt werden, daß innerhalb eines Loches eine Flüssigkeitsschichtdicke auftritt, die zur Aufnahme eines guten Spektrums geeignet ist. Eine Verwendung des beschriebenen Probenträgers für die Durchführung quantitativer Transmissionsspektroskopien wird jedoch nicht offenbart.

Aufgabe der vorliegenden Erfindung war es, eine quantitative Transmissionsspektroskopie zur Verfügung zu stellen, bei der keine aufwendigen Dosierungsschritte erforderlich sind. Insbesondere sollten manuelle Dosierungsschritte im Bereich von 100 nl bis zu einigen µl vermieden werden.

Die Aufgabe wird gelöst durch ein Verfahren zur Dosierung einer Probeflüssigkeit für transmissionsspektroskopische Untersuchungen mit den in Anspruch 1 angegeben Schritten.

Ein Verfahren wie die erfindungsgemäße Transmissionsspektroskopie kann sowohl im sichtbaren als auch im infraroten oder ultravioletten Teil des Spektrums angewandt werden. Im IR-Bereich sind nur wenige Materialien bekannt, die ausreichend strahlungsdurchlässig sind. Die bekannten Materialien besitzen außerdem den Nachteil, daß sie von wässrigen Probeflüssigkeiten angegriffen werden. Das erfindungsgemäße Verfahren bietet demgegenüber den Vorteil, daß es von den optischen Eigenschaften des Materials unabhängig ist und sich daher eine Vielzahl von Materialien eignen.

Für ein erfindungsgemäßes Verfahren geeignete Probenträger beinhalten einen Halter und mindestens ein Netz, das in diesem Halter befestigt ist. Der Halter dient zur mechanischen Stabilisierung des Netzes und zur Verbesserung der Handhabbarkeit. Der Halter besteht vorzugsweise aus einem starren Material, wie beispielsweise Metall oder Kunststoffen, wie Polyethylen, Polystyrol, Polymethylmetacrylat etc. Der Halter besitzt in der Regel die Form einer dünnen Platte, in der sich Ausnehmungen für ein oder mehrere Netze befinden. Die für die Erfindung geeigneten Netze können aus Metallen, wie beispielsweise Edelstahl oder auch als saugfähigen Stoffen bestehen. Bevorzugt sind jedoch solche Netze, die aus einem nicht-saugfähigen Material bestehen. Gut geeignet sind daher Netze aus Kunststoffen, wie Polyethylen, Polystyrol oder Teflon. Geeignete Netze für die Aufnahme von Infrarotspektren werden von der Firma Janos Technology Inc. unter der Bezeichnung ECRAN™ Screen Cell vertrieben. Die Netze können in den Halter eingeklebt, eingepreßt oder eingeschweißt sein. Für die Beschreibung geeigneter Probenträger mit Netzen wird hiermit vollinhaltlich auf die US-Patentschrift 5,290,705

Bezug genommen. Neben der zweiteiligen Ausführung der Probenträger aus Halter und Netz sind weiterhin auch einteilige Probenträger geeignet. Solche Probenträger können beispielsweise im Spritzgußverfahren erhalten werden. Aus der Herstellbarkeit eines geeigneten Probenträgers im Spritzgußverfahren wird auch deutlich, daß unter "Netze" im Rahmen der Erfindung nicht nur die gewöhnlich unter dieser Bezeichnung bekannten Strukturen verstanden werden sollen. Unter "Netze" werden im Rahmen der Erfindung auch gelochte, gestanzte oder im Spritzgußverfahren hergestellte Strukturen verstanden, die eine regelmäßige Abfolge von Löchern besitzen.

Bei Verwendung eines Probenträgers mit einem Netz wird zunächst eine Probenflüssigkeit mit dem Trägernetz so in Kontakt gebracht, daß die Flüssigkeit über die Maschen des Netzes ausspreitet und in den Maschen einen Flüssigkeitsfilm bildet. Das Inkontaktbringen von Flüssigkeit und Netz kann beispielsweise erfolgen, indem die Flüssigkeit mit einer Pipette auf das Netz aufgetropft wird. Als vorteilhaft hat es sich erwiesen, wenn die Flüssigkeit, die in vielen Fällen zunächst einen Tropfen auf dem Netz bildet, mit der Pipettenspitze oder einem anderen Gegenstand über das Netz verteilt wird. Eine gleichmäßige Verteilung der Flüssigkeit über das Netz kann auch erreicht werden, wenn ein mit Flüssigkeit benetzter Stempel mit dem Netz in Kontakt gebracht wird. Eine besonders gleichmäßige Verteilung der Flüssigkeit wird erreicht, wenn das Netz in die Probenflüssigkeit eingetaucht wird. Hierbei ist es vorteilhaft wenn sich das Netz innerhalb eines solchen Trägers befindet, der außerhalb des Netzes keine Flüssigkeiten aufnimmt. Nach dem Eintauchen des Probenträgers in die Flüssigkeit wird der Probenträger abgestreift, um überschüssige Flüssigkeit zu entfernen. Es kann so vermieden werden, daß überschüssige Flüssigkeit mit dem Netz in Fluidkontakt verbleibt und somit die Dosierung, die das Netz selbsttätig vornimmt, verfälscht.

Überraschenderweise hat sich herausgestellt, daß es bei Einhaltung bestimmter Randbedingungen möglich ist, eine Dosierung mit Netzen vorzunehmen. Es hat sich gezeigt, daß eine Flüssigkeit, die auf das Netz gegeben wird, so ausspreitet, daß die Flüssigkeitsvolumina innerhalb jeder Masche gleich groß sind, vorausgesetzt, daß die Maschen die gleiche Geometrie aufweisen. Zur Erzielung einer gleichmäßigen Verteilung ist es wichtig, daß die Flüssigkeit ausspreitet und keinen Tropfen auf dem Netz ausbildet. Für eiweißhaltige Probeflüssigkeiten, wie beispielsweise Blut oder Serum, kann ein geeignetes Ausspreiten erzielt werden, wenn für das Netz Maschenweiten zwischen 100 μm und 2 mm verwendet werden. Probeflüssigkeiten, wie beispielsweise Urin, besitzen schlechte Filmbildungseigenschaften. Solche Flüssigkeiten können jedoch ebenfalls mit den erfindungsgemäßen Probenträgern spektroskopiert werden, wenn den Probeflüssigkeiten Stoffe zugesetzt werden, die die Filmbildungseigenschaften erhöhen. Stoffe, die die Filmbildungseigenschaften verbessern, sind in der Regel solche, die einen hohen Eiweißanteil aufweisen. Bevorzugt werden hierfür Albumine, wie z. B. Rinderserumalbumin, verwendet.

Die Ausspreitung der Probeflüssigkeit über das Netz kann verbessert werden, wenn der Probeflüssigkiet ein Detergenz, bevorzugt in einer Konzentration kleiner 1,5 %, zugesetzt wird. Es ist auch möglich, das Netz des Probenträgers bereits werkseitig mit einem Detergenz zu beschichten.

Experimentell wurde die Beobachtung, daß gleichgroße Maschen gleiche Volumina einer Flüssigkeit aufnehmen, untermauert, indem gefärbte Sera unterschiedlicher Viskosität in Transmission vermessen wurden. Es zeigte sich, daß nicht nur gleiche Flüssigkeitsmengen von den Maschen eingeschlossen wurden, sondern daß die Menge der eingeschlossenen Flüssigkeit im Bereich der klinisch-relevanten Viskositäten von Seren zwischen 1,6 und 2,0 mPas gleichbleiben. Es ist daher möglich, für Netze mit vorgegebener Maschengeometrie und vorgegebenem Material eine Konstante zu bestimmen, die angibt, welche Menge einer Flüssigkeit eines bestimmten Viskositätsbereiches in jeder Masche festgehalten wird.

Quantitative Transmissionsspektroskopie im Volumenbereich unterhalb von 2,0 μl kann mit den im Stand der Technik bekannten Methoden nur bedingt durchgeführt werden, da in diesem Bereich die Volumendosierung zu ungenau wird. Mit den erfindungsgemäßen Verfahren ist eine genaue Dosierung jedoch nicht erforderlich, da die zur Auswertung gelangende Flüssigkeitsmenge auf anderem Wege ermittelt wird. Die erfindungsgemäße Methode ermöglicht somit insbesondere Untersuchungen, bei denen bevorzugt kleine Probenmengen im Bereich zwischen 0,2 und 2,0 μl analysiert werden.

Es hat sich weiterhin gezeigt, daß die beobachteten Phänomene nicht nur für Netze gelten, sondern beispielsweise auch für gelochte, gestanzte oder direkt mit Löchern geformte Strukturen.

Erfindungsgemäß geeignete Netze weisen einen Maschendurchmesser von 100 μm bis 2 mm, bevorzugt zwischen 200 μm und 1,3 mm auf und bestehen aus einem Gewebe, das nicht saugfähig ist. Als besonders geeignetes Netzmaterial haben sich Fluorotex® und Scrynel® erwiesen.

Für die Durchführung einer quantitativen Transmissionsspektroskopie werden die mit Flüssigkeit benetzten Probenträger im wesentlichen senkrecht zu ihrer Netzebene mit einem Strahlenbündel bestrahlt. Für die Bestrahlung des Probenträgers können Spektroskope des Standes der Technik, z. B. von Bruker oder Perkin Elmer verwendet werden. Eine Bestrahlung senkrecht zur Netzebene ist vorteilhaft, da so die durchstrahlte Menge an Probeflüssigkeit maximal ist. Bevorzugt besitzt das verwendete Strahlungsbündel einen konstanten Querschnitt.

Die Bestrahlung der Probeflüssigkeit auf dem Probenträger kann bei einer ersten Variante des Verfahrens so erfolgen, daß das Strahlenbündel durch einen Bereich des Netzes hindurchtritt, in dem alle Maschen ausgefüllt sind. Die zur Auswertung gelangende Menge an eingetrockneter Probeflüssigkeit ist in diesem Fall durch den Querschnitt des Strahlenbündels limitiert. Bei einer zweiten Variante erfaßt das Strahlenbündel sowohl Maschen, die mit eingetrockneter Probeflüssigkeit gefüllt sind, als auch solche, die leer sind. In diesem Fall ergibt sich die zur Auswertung gelangende Menge an Probeflüssigkeit aus der Zahl der gefüllten Maschen, die vom Strahlenbündel erfaßt werden. Bei beiden Varianten des Verfahrens wird die transmittierte Strahlung detektiert. Die durch die eingetrocknete Probeflüssigkeit erfolgte Absorption wird bestimmt, indem das Netz zuerst ohne und danach mit eingetrockneter Probeflüssigkeit vermessen wird. Falls die Absorption des Netzes bereits bekannt oder im Gerät gespeichert ist, kann der Meßschritt ohne Probeflüssigkeit entfallen. Aufgrund der detektierten Absorption kann die Konzentration eines oder mehrerer in der Probeflüssigkeit enthaltener Analyten berechnet werden. Zur quantitativen Konzentrationsbestimmung ist es notwendig, das Volumen der Probeflüssigkeit zu kennen, das zu einer Abschwächung der Strahlung geführt hat. Dieses Volumen wird innerhalb dieser Patentanmeldung als das effektive Volumen bezeichnet. Zum effektiven Volumen tragen nur solche Volumina bei, die von dem Strahlenbündel durchstrahlt werden. Das auf einen Probenträger aufgegebene Volumen entspricht daher nicht dem Volumen, das zur Auswertung gelangt. Das der Auswertung zugängliche Volumen ist jedoch empirisch bestimmbar.

Für ein Verfahren gemäß Anspruch 1, bei dem die durchstrahlte Probenmenge, durch die Querschnittsfläche zwischen Strahlenbündel und Netzebene begrenzt wird, kann eine Ermittlung des effektiven Volumens auf dem folgenden Weg erfolgen. Eine geeignete Menge einer Kalibrationsflüssigkeit, beispielsweise 1 µl, wird auf das Netz eines bestimmten Probenträgers aufgegeben, so daß die Flüssigkeit über die Maschen des Netzes ausspreitet. Die Kalibrationsflüssigkeit besitzt einen genau bekannten Absorptionskoeffizienten a bzw. ein genau bekanntes Absorptionsspektrum für die verwendete Meßstrahlung. Die Kalibrationsflüssigkeit kann einen oder mehrere Stoffe enthalten, die ein bekanntes Absorptionsspektrum besitzen. Vorteilhaft besitzen die genannten Stoffe mindestens ein gut ausgeprägtes Absorptionsmaximum, das sich im Bereich der für die Messung verwendeten Strahlung befindet. Aufgrund der Lambert-Beer'schen Gesetzes kann aus der Strahlungsabsorption durch die Kalibrationsflüssigkeit auf die Menge an Flüssigkeit zurückgeschlossen werden, die zur Schwächung des Meßstrahles beiträgt. Bei der Messung ist zu berücksichtigen, daß bereits durch ein Netz ohne Flüssigkeit eine Abschwächung des Strahlenbündels erfolgt. Zur Bestimmung der Absorption durch die Kalibrationsflüssigkeit ist daher die Differenz der Strahlung des Netzes mit Kalibrationsflüssigkeit und des gleichen Netzes ohne Kalibrationsflüssigkeit maßgeblich Die Ermittlung des effektiven Volumens kann numerisch folgendermaßen erfolgen:

Mit dem Absorptionskoeffizienten (a), der Konzentration (c) und dem effektiven Volumen (V) einer Flüssigkeit sowie dem wirksamen Strahlquerschnitt (Q) am Ort der Probe lautet das Lambert-Beer'sche Gesetz

$$1g\,(I/I_o) = -\,a \cdot V/Q \cdot c.$$

Durch Messung der Intensität der transmittierten Strahlung mit leerem Netz ($I_o$) und mit gefülltem Netz (I) erhält man bei bekannten Parametern a und c der Kalibrationsflüssigkeit und bekannter Querschnittsfläche (Q) zwischen Strahlungsbündel und Ebene des Netzes das effektive Volumen (V) der für die Strahlung zugänglichen Flüssigkeitsmenge. Hieraus kann die Konstante ($K_1$) berechnet werden:

$$K_1 = V/Q$$

$K_1$ ist ein netztypisches Maß für eine effektive Schichtdicke des ausgebildeten Flüssigkeitsfilms.

Bei der oben genannten Berechnung wurde davon ausgegangen, daß gleiche Volumina der Kalibrationsflüssigkeit unabhängig von ihrer geometrischen Anordnung im Strahlengang stets die gleiche Strahlungsabsorption hervorrufen. Aus eigenen Experimenten und dem Stand der Technik ist bekannt, daß das Lambert-Beer'sche Gesetz auch unter den Bedingungen am Netz Gültigkeit besitzt.

Die durch die Kalibration gewonnene Konstante $K_1$ gilt für ein Netz mit vorgegebener Maschenweite und Geometrie aus einem bestimmten Material. Da die Viskosität der verwendeten Flüssigkeit für das Volumen, das in einer einzelnen Masche festgehalten wird, eine Rolle spielt, ist die Ableitung des Volumens aus der Formel V = Q . K1 umso genauer, je genauer die Viskositäten der Kalibrationslösung und der Probeflüssigkeit übereinstimmen. In Experimenten, die mit Seren unterschiedlicher Viskosität durchgeführt wurden, hat sich jedoch gezeigt, daß die Viskosität der Flüssigkeit einen weit geringeren Einfluß auf das Flüssigkeitsvolumen innerhalb einer Masche nimmt, als dies ursprünglich vermutet wurde. Die Verwendung der vorstehend genannten Formel zur Berechnung des effektiven Volumens ist demnach auch geeignet, wenn die Viskosität der Kalibrationsflüssigkeit und der Probeflüssigkeit relativ weit auseinanderliegen.

Die Bestimmung der Konstante $K_1$ kann werkseitig erfolgen und beispielsweise in Form eines Codes an dem Probenträger angebracht werden. Je nach Genauigkeitsanforderungen kann die Konstante $K_1$ für jeden individuellen Probenträger, für eine Produktionscharge von Probenträgern oder sogar nur einmal für gleichartige Probenträger, die aus unterschiedlichen Chargen stammen, angegeben werden.

Das effektive Volumen V der untersuchten Probe kann auch nach der Formel V = N·$K_2$ berechnet werden, wobei N die Zahl der benetzten Maschen und $K_2$ eine Konstante des Probenträgers ist. Die Bestimmung der Konstante $K_2$ kann auf analogem Wege wie für die Konstante $K_1$ beschrieben, ermittelt werden. Ein Unterschied liegt lediglich darin, daß für die Bestimmung der Konstante die jeweils gefüllten Maschen, die vom Strahlenbündel erfaßt werden, ausgezählt werden. Eine Auszählung der gefüllten Maschen kann mit aus dem Stand der Technik bekannten Verfahren erfolgen. Beispielsweise kann das Netz des Probenträgers mit einem Strahlenbündel abgerastert werden, das kleiner ist als der Maschenquerschnitt. Eine Detektion des transmittierten Strahlenbündels ermöglicht es, zwischen gefüllten und ungefüllten Maschen zu unterscheiden. Vorteilhaft kann auch ein Verfahren mit Bilderkennung eingesetzt werden, bei dem ein Strahlenbündel ausreichender Größe auf das Netz gerichtet und die transmittierte Strahlung mit einem CCD-Array detektiert wird. Aufgrund der Signale des CCD-Arrays kann mit Hilfe von Algorithmen zur Mustererkennung, die im Stand der Technik hinlänglich bekannt sind, zwischen gefüllten und ungefüllten Maschen unterschieden sowie die Zahl der gefüllten Maschen bestimmt werden. Selbstverständlich ist auch eine Bestimmung der Zahl gefüllter Maschen mit bloßem Auge oder mit einer Lupe möglich.

$K_2$ ist - im Unterschied zu $K_1$ - ein Maß für das effektive Probenvolumen, das durch eine Masche festgehalten wird.

Ein Verfahren zur quantitativen Transmissionsspektroskopie an Netzen, das sich ebenfalls als sehr vorteilhaft erwiesen hat, besteht darin, daß der Querschnitt des Strahlungsbündels kleiner als der Querschnitt einer einzelnen Masche gewählt wird. Auf diese Weise kann verhindert werden, daß bei Verschiebung des Netzes, beispielsweise bedingt durch eine Fehljustierung, wechselnde Bereiche des Netzes ausgewertet werden. Bei der genannten bevorzugten Ausführungsform wird lediglich der Film in einer einzelnen Masche durchstrahlt und die Schwächung des Meßstrahls durch die eingetrocknete Probeflüssigkeit detektiert. Vorteilhaft ist es weiterhin, wenn auf diese Weise eine Vielzahl von Maschen des Netzes nacheinander ausgewertet werden, um statistische Schwankungen zu unterdrükken.

Zur Durchführung einer quantitativen Transmissionsspektroskopie nach dem erfindungsgemäßen Verfahren werden die Konstanten $K_1$ bzw. $K_2$ zunächst zur Berechnung des effektiven Volumens an Probeflüssigkeit verwendet und mit diesem effektiven Volumen und der detektierten/transmittierten Strahlung die Konzentration eines oder mehrerer in der Probeflüssigkeit enthaltener Analyten berechnet. Zur Durchführung dieser Berechnung ist entweder direkt ein Mikroprozessor in das Spektrometer integriert oder das Spektrometer gibt die gemessenen Daten, im allgemeinen wellenlängenaufgelöste Intensitäten, an einen geeigneten Mikroprozessor weiter. Im Stand der Technik, beispielsweise "Clinical Chemistry, Vol. 38, No. 9, 1992, Seiten 1623 - 1631", ist bekannt, wie aus den Intensitäten der Spektren die Konzentrationen von Analyten ermittelt werden. Da für diese Berechnung die Konstanten $K_1$ oder $K_2$ benötigt werden, müssen diese dem Mikroprozessor mitgeteilt werden. Ein erster Weg besteht darin, daß der Benutzer die Konstante über eine Tastatur in den Mikroprozessor eingibt. Vorteilhaft ist es jedoch, wenn die Konstanten in codierter Form, beispielsweise als Strichcode, vorliegen, so daß sie über einen Scanner in den Mikroprozessor eingelesen werden können. Bei einer besonders bevorzugten Ausführungsform wird in der Apparatur nur ein Typ von Probenträger oder eine begrenzte Anzahl verschiedener Typen von Probenträgern verwendet und die Apparatur besitzt eine Einrichtung zur Erkennung des Typs von Probenträger. Ein einfaches Erkennungssystem, das für diesen Zweck geeignet ist, ist beispielsweise im Bereich der Photographie üblich. Moderne Kleinbildkameras besitzen eine elektrische Abtasteinrichtung, mit der sie erkennen, welche Lichtempfindlichkeit der in der Kamera befindliche Film besitzt. Wird in der Apparatur zur Transmissionsspektroskopie lediglich ein Typ von Probenträger verwendet, so können die für diesen Probenträger-Typ spezifischen Konstanten werkseitig in dem Mikroprozessor gespeichert werden.

Bei einer weiteren Ausgestaltung des erfindungsgemäßen Verfahrens wird der Probenträger mit einem Netz direkt zur Dosierung von Flüssigkeiten eingesetzt. Der Probenträger wird mit einer Flüssigkeit in Kontakt gebracht, so daß die Flüssigkeit über die Maschen des Netzes ausspreitet und in den Maschen einen Flüssigkeitsfilm ausbildet Die von der Flüssigkeit benetzten Maschen werden nach einem der weiter oben beschriebenen Verfahren ausgezählt. Die Berechnung des Flüssigkeitsvolumens V auf dem Probenträger erfolgt nach der Formel $V = N \cdot K_3$, wobei N die Zahl der durch die Flüssigkeit benetzten Maschen und $K_3$ eine Konstante des Probenträgers ist. Das Flüssigkeitsvolumen V betrifft in diesem Fall das Gesamtvolumen, das sich vor dem Eintrocknen auf dem Träger befindet, es ist daher verschieden von dem effektiven Volumen der vorgenannten Ausführungsformen. Neben dem effektiven Volumen der für ein Strahlenbündel zugänglichen Probenmenge umfaßt das Volumen V in diesem Fall auch die Volumenanteile, die sich oberhalb oder unterhalb des Netzmaterials befinden. Die Bestimmung der Konstanten $K_3$ ist möglich, indem eine genau vorbekannte Flüssigkeitsmenge auf den Probenträger aufgegeben und die Zahl der mit Flüssigkeit benetzten Maschen bestimmt wird. Die Konstante $K_3$ ergibt sich dann aus dem Quotienten des bekannten Volumens und der Zahl benetzter Maschen. Es ist weiterhin möglich, die Konstante $K_3$ auf analytischem Wege zu bestimmen, indem eine Flüssigkeit mit bekanntem Gehalt eines Analyten auf den Probenträger gegeben wird und die benetzten Maschen des Netzes ausgezählt werden. Die auf dem Probenträger befindliche Flüssigkeitsmenge wird daraufhin quantitativ in ein Probengefäß überführt und eine klassische Analyse durchgeführt, um über die Analytmenge auf die aufgegebene Flüssigkeitsmenge zurückzuschließen. $K_3$ hat die Bedeutung eines Volumens, das durch eine einzelne Masche festgehalten wird.

Die den beschriebenen Verfahren zugrundeliegende Idee, eine Dosierung von Flüssigkeit mittels Probenträgern mit Netzen vorzunehmen, ermöglicht weiterhin eine quantitative Transmissionsspektroskopie, die ohne die Bestimmung von Konstanten, wie K1 oder K2, für die Probenträger auskommt Bei diesem Verfahren wird ein bekanntes Volumen der Probeflüssigkeit mit einem bekannten Volumen einer Kalibrationsflüssigkeit vermischt und das erhaltene Gemisch auf einen Probenträger mit einem Netz aufgegeben. Durch den genannten Mischungsprozeß wird eine Flüssigkeit hergestellt, die aufgrund der Kalibrationsflüssigkeit einen internen Standard enthält. Zur Analyse der Probeflüssigkeit wird das erhaltene Flüssigkeitsgemisch mit einem Probenträger, der mit einem Netz ausgestattet ist, in Kontakt gebracht, so daß die Probe über die Maschen des Netzes ausspreitet und in den Maschen einen Flüssigkeitsfilm ausbildet. Der so präparierte Probenträger wird nach dem Eintrocknen der Flüssigkeit, so daß sich ein getrockneter Film bildet, mit einem Strahlenbündel bestrahlt und die transmittierte Strahlung detektiert. Aufgrund der Absorption von Strahlung durch die eingetrocknete Kalibrationsflüssigkeit kann auf das effektive Volumen der auf dem Netz befindlichen eingetrockneten Kalibrationsflüssigkeit zurückgeschlossen werden. Da das Mischungsverhältnis von Kalibrationsflüssigkeit und Probeflüssigkeit bekannt ist, ist aus dem ermittelten effektiven Volumen an Flüssigkeitsgemisch auch direkt die effektive Menge an Probeflüssigkeit berechenbar. Aufgrund der ebenfalls gemessenen Absorption, die durch die eingetrocknete Probeflüssigkeit erfolgt ist, kann die Konzentration eines oder mehrerer Analyten in der Probeflüssigkeit bestimmt werden.

Bei dem genannten Verfahren ist es vorteilhaft, wenn die Kalibrationsflüssigkeit so gewählt wird, daß sie Strahlung in Frequenzbereichen absorbiert, die sich mit den Frequenzbereichen, die für die Bestimmung von Analyten notwendig sind, nicht überlappen. Aufgrund moderner Auswertemethoden, wie beispielsweise einer multivariaten Auswertung oder einer Diskriminanzanalyse, ist es jedoch möglich, auch solche Kalibrationsflüssigkeiten zu verwenden, deren Absorption sich teilweise mit den Absorptionen von Analyten überlagern. Die genannten Auswerteverfahren sind im Stand der Technik bekannt. Exemplarisch sei auf die Literaturstelle "Applied Spectroscopy", Band 47, Seiten 1519-1521 (1993)" hingewiesen.

Erfindungsgemäß werden die Flüssigkeiten, die sich auf dem Netz des Probenträgers befinden, vor der spektroskopischen Analyse eingetrocknet. Dies hat den Vorteil, daß die durch Wasser hervorgerufenen Absorptionen stark verringert werden. Die in der klinischen Chemie als Analyten interessanten Stoffe, wie beispielsweise Glukose, Proteine, Hormone, Glyceride, Lipide, Enzyme, Pharmaka, Drogen und auch Elektrolyte, weisen einen sehr niedrigen Dampfdruck auf. Ein Nachweis dieser Stoffe wird daher durch eine Eintrocknung nicht beeinträchtigt. Die Eintrocknung der Flüssigkeiten auf dem Netz kann passiv durch Verdunstung der Lösungsmittel oder durch Trocknungsvorrichtungen aktiv erfolgen. Für die Durchführung einer quantitativen Spektroskopie an eingetrockneten Proben sie hiermit vollinhaltlich auf die EP-A-0 644 413 Bezug genommen. Vorteilhaft wird die Eintrocknung bei waagerechtem Netz vorgenommen, da so die für die Erfindung wichtige Bedingung, daß Maschen gleicher Geometrie gleiche Flüssigkeitsvolumina aufnehmen, am besten gewährleistet werden kann.

Eine Eintrocknung der Probeflüssigkeiten auf dem Netz ist insbesondere für die Infrarotspektroskopie von Vorteil, da Lösungsmittel, insbesondere Wasser, im Infrarotbereich eine starke Absorption hervorrufen und somit die Absorptionsbanden der Analyten überdecken.

Beim Eintrocknen der Probeflüssigkeiten auf dem Netz bildet sich zunächst ein Film, der im Verlauf der Trocknung reißen kann. Wie bereits an früherer Stelle erwähnt, ist jedoch die geometrische Anordnung der Probe im Strahlengang nur von geringer Auswirkung auf die Anwendbarkeit des Lambert-Beer'schen Gesetzes. Das Reißen der Filme auf dem Netz verursacht daher keine wesentliche Störung der quantitativen Transmissionsspektroskopie. Bei hohen Genauigkeitsanforderungen kann es jedoch vorteilhaft sein, wenn ein Reißen der Filme auf dem Netz vermieden wird. Ein Reißen der Filme kann durch die Auswahl geeigneter Netzmaterialien verhindert werden. Es hat sich herausgestellt, daß Netze aus dehnbarem Kunststoff wie beispielsweise Polyethylen, besonders geeignet sind. Weiterhin kann der Probeflüssigkeit ein Detergenz oder ein Filmbildner zugesetzt werden, die ebenfalls das Reißen der getrockneten Filme verhindern. Geeignete Detergenzien bzw. Filmbildner sind beispielsweise Tween 20® und Propiofan®.

Ein weiterer Aspekt der Erfindung ist die Verwendung von Probenträger mit Netzen zur Dosierung in einem der bereits vorgestellten Verfahren. Für die Netze sind insbesondere nicht saugfähige Materialien geeignet. Dadurch kann gewährleistet werden, daß aufgegebene Probeflüssigkeit nicht unkontrolliert durch Kapillarwirkung des Netzes aus dem für die Strahlung zugänglichen Bereich heraustransportiert wird.

Für die Netze der Probenträger ist es weiterhin vorteilhaft, wenn die Maschen einen Durchmesser zwischen 200 µm und 1.3 mm aufweisen. Diese Größen ergeben sich daraus, daß die für die klinische Analytik wichtigen Probeflüssigkeiten, wie Vollblut, Serum, Hämolysat und Plasma für die Transmissionsspektroskopie geeignete Filme auf Netzen mit diesen Maschendurchmessem ausbilden.

Die Erfindung wird anhand der folgenden Figuren näher erläutert:

Figur 1: Schematische Darstellung einer Vorrichtung zur Transmissionsspektroskopie

Figur 2:    Querschnitt durch das Netz eines Probenträgers

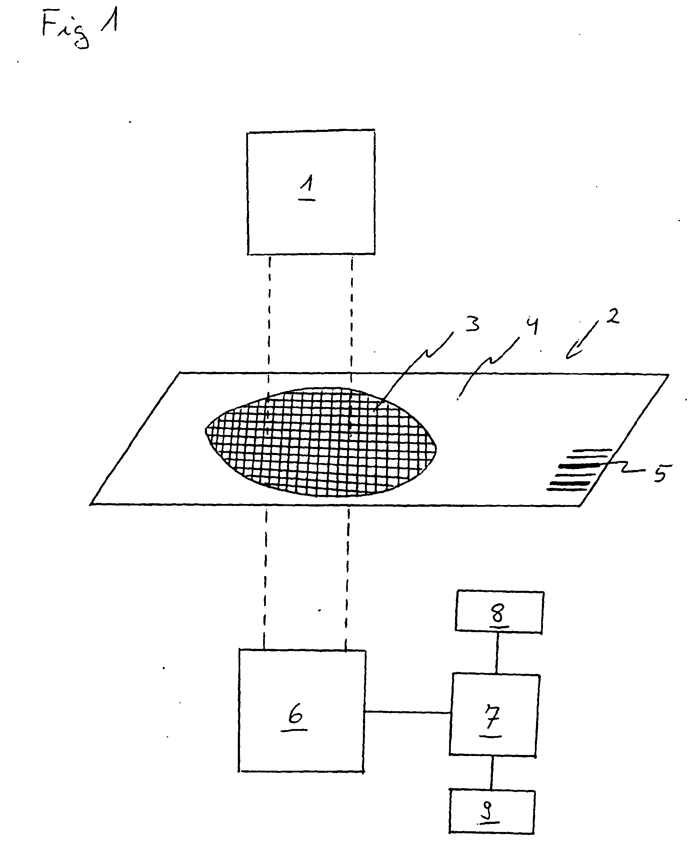

Figur 1 zeigt schematisch eine Vorrichtung zur Durchführung einer quantitativen Transmissionsspektroskopie unter Verwendung von Probenträgern mit Netzen. Die Lichtquelle (1) besteht aus einem strahlungserzeugenden Element, beispielsweise einem Nernst-Stift oder Globar und einem Linsensystem zur Fokussierung der Strahlung. Das von der Lichtquelle ausgesandte Strahlenbündel fällt auf das Netz (3) des Probenträgers (2). Der Probenträger (2) besitzt einen Halter (4), in dem das Netz (3) befestigt ist. Auf dem Halter (4) können Daten aufgebracht sein, die zur Identifizierung des jeweiligen Probenträgers dienen. Im dargestellten Beispiel befindet sich auf dem Probenträger (2) ein Strichcode (5), der charakteristisch für die Konstante $K_1$ ist.

Nachdem das Strahlenbündel das Netz (3) passiert hat, fällt es auf einen Detektor (6), der Teil eines herkömmlichen Spektrometers für den verwendeten Strahlungsbereich ist. Die Strahlung wird nach Wellenlängen aufgelöst detektiert und die erhaltenen Daten einem Mikroprozessor (7) zur Verfügung gestellt. Der Mikroprozessor ist weiterhin mit einem Strichcodelesegerät (8) verbunden, mit dem der Strichcode (5) des Probenträger (2) gelesen werden kann. Aufgrund der spezifischen Daten des Probenträgers, die im Strichcode gespeichert vorliegen und den Informationen des aufgenommenen Spektrums, berechnet der Mikroprozessor (7) die Konzentration eines oder mehrerer Analyten. Die Ergebnisse dieser Berechnung werden auf einem Display (9) dargestellt.

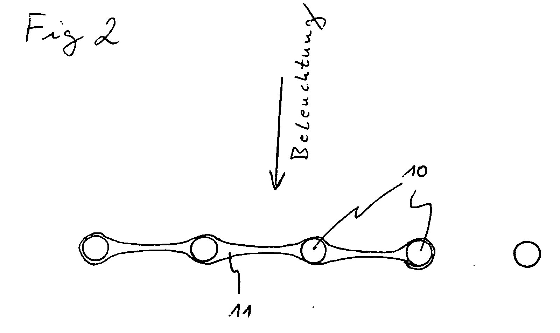

Figur 2 zeigt den Querschnitt durch ein Netz, auf dem sich ein Flüssigkeitsfilm ausgebildet hat. Die Flüssigkeit (11) bildet zwischen den Fäden (10) des Netzes einen Film aus. In den für die Erfindung relevanten Fällen, in denen die Flüssigkeit über das Netz ausspreitet, nimmt die Flüssigkeit (11) zwischen den einzelnen Fäden (10) die Form einer konkaven Linse an. In Figur 2 ist weiterhin zu erkennen, daß die Flüssigkeit (11) die Fäden (10) umhüllt, so daß auch Flüssigkeitsanteile oberhalb und unterhalb der Fäden vorhanden sind die für die Transmissionsspektroskopie nicht zugänglich sind.

**Patentansprüche**

1.   Verfahren zur Dosierung einer Probenflüssigkeit für transmissionsspektroskopische Untersuchungen mit den Schritten:

     Inkontaktbringen einer Probenflüssigkeit (11) mit einem Probenträger (2), der mit einem Netz (3) ausgestattet ist, so daß die Flüssigkeit über die Maschen des Netzes (3) ausspreitet und in den Maschen einen freitragenden Flüssigkeitsfilm bildet, und

Eintrocknen der Probenflüssigkeit (11) auf dem Netz (3) des Probenträgers (2), so daß sich ein getrockneter Film bildet.

2.   Verfahren nach Anspruch 1, bei dem ein bekanntes Volumen der Probenflüssigkeit (11) mit einem bekannten Volumen einer Kalibrationsflüssigkeit, die einen bekannten Absorptionskoeffizienten besitzt, vermischt wird, um eine Probe mit internem Standard herzustellen, bevor die Probe mit internem Standard mit dem Probenträger (2) in Kontakt gebracht wird, so daß sich in den Maschen des Netzes (3) der Flüssigkeitsfilm bildet.

3.   Verfahren nach Anspruch 1 oder 2, bei dem das Eintrocknen in waagerechter Lage erfolgt.

4.   Verfahren nach einem der vorhergehenden Ansprüche, bei dem das Inkontaktbringen durch Eintauchen des Probenträgers (2) in die Probenflüssigkeit (11) erfolgt.

5.   Verfahren nach einem der Ansprüche 1 bis 3, bei dem das Inkontaktbringen durch Aufgabe mit einer Pipettenspitze oder Aufpressen eines Stempels erfolgt.

6.   Verfahren nach einem der vorhergehenden Ansprüche, bei dem als Probenflüssigkeit (11) Serum verwendet wird.

7.   Verfahren nach einem der vorhergehenden Ansprüche, bei dem der Probenflüssigkeit (11) ein Detergenz zugesetzt wird.

8.   Verfahren nach einem der vorhergehenden Ansprüche, bei dem ein Flüssigkeitsvolumen von 1nl bis 100 µl, bevorzugt zwischen 0,2 µl und 2,0 µl, auf das Netz (3) des Probenträgers aufgebracht wird.

9.   Verfahren nach einem der vorhergehenden Ansprüche, bei dem das Netz (3) des verwendeten Probenträgers (2) aus einem nicht saugfähigen Material besteht.

10.  Verfahren nach einem der vorhergehenden Ansprüche, bei dem die Maschen des verwendeten Netzes (3) einen Durchmesser zwischen 100 µm und 2 mm, bevorzugt zwischen 200 µm und 1,3 mm haben.

11.  Verfahren nach einem der vorhergehenden Ansprüche, bei dem das verwendete Netz (3) mit einer Detergenzlösung imprägniert wurde.

12.  Verfahren zur quantitativen transmissionsspektroskopischen Untersuchung mit den Schritten
     Dosieren einer Probenflüssigkeit (11) mit einem Verfahren nach einem der vorhergehenden Ansprüche,
Bestrahlung des Probenträgers (2) im wesentlichen senkrecht zur Netzebene mit einem Strahlenbündel, so daß es durch den Film hindurchtritt,
Detektieren von transmittierter Strahlung.

13. Verfahren nach Anspruch 12, bei dem der Probenträger (2) mit Strahlung aus dem Infrarotbereich gestrahlt wird.

14. Verfahren nach Anspruch 12 oder 13, **dadurch gekennzeichnet, daß** der Querschnitt des Strahlenbündels kleiner als der Querschnitt einer einzelnen Masche des Netzes (3) gewählt wird.

15. Verfahren nach Anspruch 14, **dadurch gekennzeichnet, daß** mehrere Maschen des Netzes (3) nacheinander durchstrahlt und ausgewertet werden.

**Claims**

1. Method for dosing a sample liquid for analysis by transmission spectroscopy, said method comprising the steps of:

   contacting a sample liquid (11) to a sample carrier (2), said sample carrier (2) being provided with a net (3) configured such that the sample liquid disperses across meshes of the net (3), thereby forming a self-supporting liquid film in the meshes, and

   drying the sample liquid (11) on the net (3) of the sample carrier (2) to form a dried film.

2. Method according to claim 1, wherein a predetermined volume of the sample liquid (11) is mixed with a predetermined volume of a calibration liquid having a known absorption coefficient to create a sample having an internal standard before the sample with the internal standard is contacted to the sample carrier (2) to form the film in the meshes of the net (3) .

3. Method according to claim 1 or 2, wherein the drying is done in a horizontal position.

4. Method according to any one of the preceding claims, wherein the contacting is conducted by immersing the sample carrier (2) in the sample liquid (11).

5. Method according to any one of claims 1 to 3, wherein the contacting is conducted by pipetting the sample liquid or by pressing with a stamp.

6. Method according to any one of the preceding claims, wherein serum is used as the sample liquid (11).

7. Method according to any one of the preceding claims, wherein a detergent is added to the sample liquid.

8. Method according to any one of the preceding claims, wherein the sample liquid which is applied to the net (3) of the sample carrier has a volume of 1 nl to 100 µl, preferably of 0.2 µl to 2.0 µl.

9. Method according to any one of the preceding claims, wherein the net (3) of the sample carrier (2) is formed of a non-absorbing material.

10. Method according to any one of the prededing claims, wherein the meshes of the net (3) have a diameter of 100 µm to 2 mm, preferably of 200 µm to 1,3 mm.

11. Method according to any one of the preceding claims, wherein the net (3) was impregnated with a detergent solution.

12. Method for analysis by quantitative transmission spectroscopy, said method comprising the steps of dosing a sample liquid (11) using a method according to any one of the preceding claims, irradiating the sample carrier (2) with a bundle of rays essentially perpendicular to a plane of the net in such a way that it passes through the film, detecting transmitted radiation.

13. Method to claim 12, wherein the sample carrier (2) is irradiated with radiation of the infrared spectral range.

14. Method according to claim 12 or 13, wherein the cross-section of the bundle of rays is smaller than the cross-section of a single mesh of the net (3).

15. Method according to claim 14, wherein several meshes of the net are irradiated and analysed one after the other.

**Revendications**

1. Procédé de dosage d'un liquide échantillon pour des analyses par spectroscopie par transmission avec les étapes de :

   ♦ mise en contact d'un liquide échantillon (11) avec un support d'échantillon (2) qui est équipé d'un filet (3) pour que le liquide se propage sur les mailles du filet (3) et forme dans les mailles un film de liquide à portée libre, et

- ◆ séchage du liquide échantillon (11) sur le filet (3) du support d'échantillon (2) pour qu'il se forme un film sec.

**2.** Procédé selon la revendication 1, dans lequel un volume connu du liquide échantillon (11) est mélangé à un volume connu d'un liquide de calibrage qui fait preuve d'un coefficient d'absorption connu pour fabriquer un échantillon avec un standard interne, avant de mettre en contact l'échantillon avec le standard interne avec le support d'échantillon (2), pour que le film de liquide se forme dans les mailles du filet (3).

**3.** Procédé selon la revendication 1 ou 2, dans lequel le séchage est assuré en position horizontale.

**4.** Procédé selon l'une quelconque des revendications précédentes, dans lequel la mise en contact est assurée par immersion du support d'échantillon (2) dans le liquide échantillon (11) .

**5.** Procédé selon l'une quelconque des revendications 1 à 3, dans lequel la mise en contact est assurée par dosage à l'aide d'une pipette ou par application d'un poinçon.

**6.** Procédé selon l'une quelconque des revendications précédentes, dans lequel on utilise un sérum en tant que liquide échantillon (11).

**7.** Procédé selon l'une quelconque des revendications précédentes, dans lequel le liquide échantillon (11) est un détergent.

**8.** Procédé selon l'une quelconque des revendications précédentes dans lequel on applique sur le filet (3) du support d'échantillon un volume de liquide de 1 nl à 100 µl, de préférence entre 0,2 µl et 2,0 µl.

**9.** Procédé selon l'une quelconque des revendications précédentes dans lequel le filet (3) du support d'échantillon utilisé (2) est en un matériau non absorbant.

**10.** Procédé selon l'une quelconque des revendications précédentes, dans lequel les mailles du filet utilisé (3) ont un diamètre compris entre 100 µm et 2 mm, de préférence entre 200 µm et 1,3 mm.

**11.** Procédé selon l'une quelconque des revendications précédentes, dans lequel le filet utilisé (3) a été imprégné d'une solution de détergent.

**12.** Procédé d'analyse quantitative par spectroscopie de transmission avec les étapes

- ◆ dosage d'un liquide échantillon (11) avec un procédé selon l'une quelconque des revendications précédentes,

- ◆ irradiation du support d'échantillon (2) sensiblement à la verticale du plan du filet avec un faisceau lumineux, de façon à ce qu'il traverse le film,

- ◆ détection du rayonnement transmis.

**13.** Procédé selon la revendication 12, dans lequel le support d'échantillon (2) est irradié avec un rayonnement dans la plage des infrarouges.

**14.** Procédé selon la revendication 12 ou 13, **caractérisé en ce que** la section transversale du faisceau lumineux est choisie de façon à être inférieure à la section transversale d'une maille individuelle du filet (3).

**15.** Procédé selon la revendication 14, **caractérisé en ce qu'**on radiographie et on évalue consécutivement plusieurs mailles du filet (3).

Fig 1

Fig 2

Beleuchtung

10

11